# EUROPÄISCHE PATENTSCHRIFT

(11) **EP 1 331 538 B1**
(45) Veröffentlichungstag und Bekanntmachung des Hinweises auf die Patenterteilung: **01.06.2005**
(21) Anmeldenummer: 02028603.5
(22) Anmeldetag: 20.12.2002
(51) Int. Cl.: G05D 7/06, F04B 43/04, F16K 31/00, B01L 3/00

(54) **Piezoelektrisch steuerbare Mikrofluidaktorik**
Piezo-electrically controlled micro actuator for fluids
Micro-actionneur pour fluides à commande piezo-électrique

(30) Priorität: 26.01.2002 DE 10202996
(43) Veröffentlichungstag der Anmeldung: 30.07.2003
(73) Patentinhaber: EPPENDORF AG, 22339 Hamburg (DE)
(72) Erfinder: Sander, Dietmar, Dr.-Ing., 21502 Geesthacht (DE)
(74) Vertreter: Patentanwälte Hauck, Graalfs, Wehnert, Döring, Siemons, Schildberg

(56) Entgegenhaltungen:
- EP-A- 0 134 614
- EP-A- 0 961 062
- DE-A- 3 919 876
- DE-C- 19 534 378
- JP-A- 60 118 915
- JP-A- 2001 193 657
- US-A1- 2002 009 374
- SZITA N ET AL: "A fast and low-volume Pipettor with integrated sensors for high precision" PROC IEEE MICRO ELECTRO MECH SYST MEMS; PROCEEDINGS OF THE IEEE MICRO ELECTRO MECHANICAL SYSTEMS (MEMS), 23. - 27. Januar 2000, Seiten 409-413, XP010377162 Miyazaki, Japan

## Beschreibung

Die Erfindung bezieht sich auf eine piezoelektrisch steuerbare Mikrofluidaktorik.

Aus der EP 1 150 105 A2 sind Gaspolster-Mikrodosiersysteme zum Dosieren von Flüssigkeitsvolumina im Mikroliter- und Submikroliterbereich bekannt. Diese Systeme haben ein Flüssigkeitsreservoir mit einem Speicherraum für die zu dosierende Flüssigkeit, dessen Begrenzung von einem nach außen führenden Flüssigkeitsdurchgang und einem Gasdurchgang durchbrochen ist. Ferner haben sie ein Gasverdrängungssystem mit einer Mikropumpe zum Pumpen eines Gases und einer Verbindung mit dem Gasdurchgang. Darüber hinaus weisen sie eine mit der Mikropumpe in Wirkverbindung stehende Dosiersteuerung auf, zum Erzeugen eines Unterdruckes oder Überdruckes durch Betätigen der Mikropumpe und zum Beaufschlagen des Flüssigkeitsreservoirs mit dem Unterdruck oder Überdruck, um Flüssigkeit durch den Flüssigkeitsdurchgang in den Speicherraum aufzunehmen oder aus diesem abzugeben.

Für die Ausführung einer solchen Luftpolster-Mikropipette werden Mikroventile und Mikropumpen benötigt. Die derzeit verfügbaren Mikroventile und Mikropumpen sind verhältnismäßig aufwendig und damit teuer und für einen wirtschaftlichen Einsatz in einem Serienprodukt nicht besonders geeignet.

Aus der EP 0 134 614 A1 ist eine Mikropumpe bekannt, die zumindest zwei Ventile und zumindest eine Verdrängungskammer umfaßt, wobei die Ventile und die Verdrängungskammer piezoelektrisch steuerbar sind.

Die Ventile und die Verdrängungskammer haben dieselbe Form und sind in einem Kanal in Serie geschaltet und funktional so steuerbar, daß eine peristaltische Verdrängung des durch den Kanal zu pumpenden Fluids erreicht wird.

Die Ventile und die Verdrängungskammer umfassen einen Siliziumchip mit eingearbeiteten Kanälen, auf deren flacher Oberseite eine Glasplatte fest angeklebt ist, die wiederum einen piezoelektrischen Chip trägt. Durch Anlegen einer Spannung an den piezoelektrischen Chip kann die Glasplatte von dem Siliziumchip weg gewölbt werden, so daß sie im Querschnitt eine Wellenform annimmt. Hierdurch wird ein von der Glasplatte verschlossener Durchgang zwischen verschiedenen Kanälen im Siliziumchip geöffnet und das Element durchgängig.

Im nicht ausgelenkten Zustand liegt die Glasplatte flach auf dem Siliziumchip auf, bis auf die Bereiche über den Öffnungen der Kanäle. Infolge der ähnlichen Größe der Piezokeramik und der darunterliegenden Auflagefläche des Siliziumchips ist die Flächenpressung und damit die Dichtigkeit der Absperrung der Kanäle relativ gering. Zudem läßt sich in dieser Anordnung die Glasplatte durch Ansteuern der Piezokeramik nur vergleichsweise gering von dem Siliziumchip weg auslenken im Vergleich zu einer Auslenkung zu dem Siliziumchip hin, die jedoch bei dieser Konstruktion ausgehend vom nicht ausgelenkten Zustand nicht möglich ist. Auch hat die wellenförmige Auslenkung zur Folge, daß nur ein sehr enger Durchgang zwischen den Kanälen freigegeben wird.

Die Herstellung derartiger Mikropumpen erfordert einen in der Halbleitertechnologie üblichen hohen Fertigungsaufwand durch eine Vielzahl unterschiedlicher Herstellungsschritte. Zudem sind die Substratmaterialien, insbesondere Silizium, obwohl ein Massenprodukt, relativ teuer.

Druckschnift EP 0 961 062 A1 zeigt ein piezo-elektrisches Ventil mit hoher Dichtigkeit.

Davon ausgehend liegt der Erfindung die Aufgabe zugrunde, eine piezoelektrisch steuerbare Mikrotluidaktorik (nachfolgend auch "Mikrofluidaktorik" genannt) zu schaffen, die mit verhältnismäßig geringem Aufwand herstellbar ist und bei der die Membranfunktion verbessert ist.

Die Aufgabe wird durch eine piezoelektrisch steuerbare Mikrofluidaktorik mit den Merkmalen des Anspruches 1 gelöst.

Die erfindungsgemäße piezoelektrisch steuerbare Mikrofluidaktorik hat
- ein planares Substrat (2), das zwei Hohlräume (10) aufweist, die auf mindestens einer Seite des Substrats (2) angeordnet sind,
- zwei Membrane (4), wobei jede Membran (4) randseitig auf einer Seite des Substrats (2) den Hohlraum (10) überspannend befestigt ist, die mindestens zwei übereinander gelagerte und miteinander verbundene Membranlagen (6, 7) aufweisen, von denen mindestens eine eine elektrisch ansteuerbare Piezokeramik ist, und die durch elektrische Ansteuerung in den Hohlraum (10) auslenkbar ist,
- wobei das Substrat (2) zwei Kanäle (11, 12) mit Öffnungen unterhalb der einen Membran (4) aufweist, von denen eine Öffnung in dem einen Hohlraum (10) zentral unterhalb der Membran (4) angeordnet ist, zur Bildung eines 2/2-Wege-Mikromembranventils (1),
- das Substrat (2) zwei Kanäle (13''') mit Öffnungen in dem anderen Hohlraum (10) unterhalb der anderen Membran (4''') hat, zur Bildung eines Mikrovolumenverdrängers (20),
- wobei das 2/2-Wege-Mikromembranventil (4) über einen Kanal mit dem Mikrovolumenverdränger (20) zur Bildung einer Mikromembranpumpe (23) verbunden ist.

Die piezokeramische Membranlage wird vorzugsweise elektrisch so angesteuert, daß sie sich in der Membranebene zusammenzieht. Das Zusammenziehen wird durch die

Volumenerhaltung der Piezokeramik bewirkt, die sich unter dem Einfluß eines äußeren elektrisch gleichgerichteten Feldes in Normalrichtung zur Membranebene polarisiert und daher ausdehnt. Mit der Piezokeramik fest verbunden ist eine weitere Membranlage, die ähnliche Abmessungen wie die Piezokeramik hat, jedoch nicht notwendigerweise elektrisch ansteuerbar bzw. passiv ist. Vorzugsweise ist die weitere Membranlage ebenfalls eine Piezokeramik. Hierdurch wird der Temperatureinfluß auf die Arbeitsweise der Membran reduziert. Das Zusammenziehen allein der aktiven Membranlage hat eine Wölbung der gesamten Membran zur Folge, ähnlich wie die Verformung eines Bimetalls bei einer Temperaturänderung.

Bei Anordnung der passiven Membranlage auf der Seite des Substrats und der aktiven Membranlage auf der gegenüberliegenden Seite wird die Membran bei Anlegen einer der Polarisationsspannung gleichgerichteten Spannung zum Substrat hin ausgelenkt. Eine entgegengesetzte Spannungsrichtung bewirkt zwar eine entgegengesetzte, jedoch wesentlich geringere Auslenkung, da die Höhe der Spannung zur Bewahrung der piezomechanischen Eigenschaften nur wesentlich geringer gewählt werden darf.

Bei Anordnung der aktiven Membranlage auf der Seite des Substrats und der passiven Membranlage auf der gegenüberliegenden Seite wird die Membran beim Anlegen einer der Polarisationsspannung gleichgerichteten Spannung vom Substrat weg ausgelenkt. Diese Anordnung hat eine vergleichsweise geringere zeitliche Dynamik, kann jedoch aufgrund des vernachlässigbar eingeschlossenen Totvolumens im nicht ausgelenkten Zustand wiederum Vorteile aufweisen. Auch bei dieser Anordnung kann durch eine entgegengesetzte Spannungsrichtung eine Auslenkung die Membran zum Substrat hin bewirkt werden.

Bei Anordnung zweier elektrisch ansteuerbarer Membranlagen kann mit dem gleichzeitigen Anlegen an die beiden aktiven Membranlagen einer gleichgerichteten und entsprechend geringen entgegengesetzten Spannung die Auslenkung gegenüber einer Verbundmembran mit einer aktiven und einer passiven Membranlage geringfügig vergrößert werden.

Die Auslenkung der Membran kann das Schließen oder die Freigabe der Öffnung des Kanals oder eine Volumenverdrängung eines Fluids durch den Kanal bewirken, um ein Mikromembranventil oder eine Mikromembranpumpe zu realisieren.

Bei der Lösung von Anspruch 1 erfolgt die Auslenkung der Membran zum Substrat in einen dort vorhandenen Hohlraum. Dort kann die Membran eine Öffnung schließen oder durch Verkleinerung des Hohlraumes eine Volumenverdrängung bewirken. Durch den Hohlraum wird erstmalig eine vorteilhafte Auslenkung der Membran zum Substrat hin ermöglicht.

Durch die Auslenkung der Membran wird im Dichtungsbereich eine besonders hohe Flächenpressung und damit eine besonders gute Abdichtung erzielt. Zudem hat die Auswölbung der Membran eine verringerte Kontaktfläche mit dem Substrat und eine erhöhte Flächenpressung im Dichtungsbereich zur Folge.

Besonders vorteilhaft ist die Ausgestaltung des Hohlraumes in Form einer Mulde. Die Mulde kann zumindest teilweise an die Form der ausgelenkten Membran angepaßt sein, wodurch ein ungünstiges Totvolumen vermieden werden kann. Bei der vorzugsweise runden Ausführung der Membran stellt sich bei randseitiger Einspannung der Membran eine etwa glockenförmige Auswölbung ein. Bei randseitig elastischer Einspannung wird die runde Membran etwa kugelkalottenförmig ausgewölbt. Die Mulde ist vorteilhaft entsprechend geformt. Falls die Membran eine Öffnung schließen soll, weicht vorzugsweise die Form der Mulde von einem Dichtungsbereich an der Öffnung von der Form der ausgelenkten Membran ab, so daß die Membran dort mit erhöhter Flächenpressung zur Anlage kommt.

Gemäß einer Ausgestaltung ist der Hohlraum eine Vertiefung in der Oberfläche des planaren Substrates. Die Membran ist dann randseitig auf der Seite des planaren Substrates befestigt.

Weitere Ausgestaltung des Dichtungsbereiches und des Hohlraumes sind von den Lösungen gemäß Anspruch 3 umfaßt.

Gemäß der ersten alternativen Lösung von Anspruch 3 hat das Substrat einen umlaufenden, vorstehenden Auflagebereich, der die Öffnung umfaßt und an den die Membran anlegbar bzw. von dem die Membran weg auslenkbar ist. In diesem Auflagebereich wird eine erhöhte Flächenpressung und damit eine verbesserte Abdichtung erzielt.

Gemäß einer Ausgestaltung ist die Membran auf dem Substrat so befestigt, daß sie im nicht ausgelenkten Zustand mit ihrem Zentrum mit einer leichten Vorspannung gegen den vorstehenden Auflagebereich drückt, wodurch eine erhöhte Flächenpressung bewirkt wird. Die Membran hat dann im nicht ausgelenkten Zustand eine leichte Wölbung. Durch Anlegen einer Steuerspannung wird die Membran vom Substrat weg ausgelenkt, so daß die Öffnung freigegeben wird. Es ist aber auch möglich, im nicht ausgelenkten Zustand durch Anlegen einer Steuerspannung in umgekehrter Richtung die Flächenpressung in der Dichtfläche noch zu erhöhen.

Gemäß der zweiten alternativen Lösung von Anspruch 3 ist die Membran randseitig auf einem von der Membran vorstehenden Auflagebereich befestigt. Die Membran ist dann auf dem Auflagebereich in einem Abstand von dem Substrat fixiert, so daß zwischen Membran und Substrat ein Hohlraum ausgebildet ist, mit den oben erwähnten Vorteilen.

Die erste und die zweite alternative Lösung sind vorteilhaft miteinander zu einer Mikrofluidaktorik kombinierbar, die einen randseitigen vorstehenden Auflagebereich für die Randbefestigung der Membran und einen zentralen vorstehenden Auflagebereich für die Abdichtung einer Öffnung hat. Die Auflagebereiche können gleich hoch oder verschieden hoch sein, um die Öffnung durch Auslenkung der Membran zum Substrat hin überhaupt oder verstärkt abzudichten und/oder durch Einbau der Membran unter Vorspannung und um die Öffnung durch Auslenkung der Membran vom Substrat weg freizugeben.

Gemäß vorteilhafter Ausgestaltungen ist der vorstehende Auflagebereich eine einteilig mit dem Substrat verbundene oder eine auf das Substrat aufgebrachte Oberflächenstruktur.

Gemäß einer Ausgestaltung ist das Substrat aus einer Keramik, z.B. Aluminiumoxid (Al₂O₃), einem Glas (z.B. Borosilikatglas), Quarz (SiO₂), aus einem Halbleiter (z.B. Silizium) oder einem steifen Kunststoff (z.B. LCP). Da bei der Ausführung der Fluidaktorik als Mikroventil oder Mikromembranpumpe erhebliche Kräfte über 10 N auftreten können, ist bevorzugt das Substrat verhältnismäßig starr im Vergleich zur Mikromembran. Gemäß einer Ausgestaltung hat das Substrat einen Temperaturausdehnungskoeffizienten, der gleich oder ähnlich dem Temperaturausdehnungskoeffizienten der Membran ist, damit die Fluidaktorik möglichst temperaturunabhängig arbeitet.

Die Funktion und Arbeitsgenauigkeit der Fluidaktorik hängt erheblich von der Maßhaltigkeit der Strukturen ab.

Gemäß einer Ausgestaltung ist das Substrat ein Spritzguß-Keramikteil. Dieses kann insbesondere einen Auflagebereich und/oder eine Mulde als Vertiefung und/oder einteilig verbundene, vorstehende Oberflächenstruktur aufweisen. Spritzguß-Keramikteile sind mit sehr engen Toleranzen herstellbar.

Gemäß einer Ausgestaltung ist das Substrat eine planare in der Dickschichttechnik standardmäßig eingesetzte Keramik, die insbesondere in einer hohen Oberflächengüte preisgünstig in sehr engen Toleranzen hergestellt wird. Zudem haben diese Keramiksubstrate für nachfolgende Einbrennprozesse eine temperaturresistente Steifigkeit.

Gemäß einer Ausgestaltung weist das Substrat mindestens eine in Dickschichttechnik aufgebrachte Oberflächenstruktur auf. Die Dickschicht- oder Dickfilmtechnik wird vor allem zur Herstellung von einfachen, kompakten elektronischen Schaltkreisen oder Hybridschaltungen eingesetzt. Auf ein als Träger dienendes Keramikplättchen werden mittels Siebdruck Leiterbahnen, Widerstände oder andere Strukturen in Schichtdicken zwischen 10 und 50 µm aus pastenartigen Mischungen eines organischen Binders mit leitenden oder dielektrischen Substanzen aufgebracht und eingebrannt. Die Erfindung bezieht die Aufbringung kleinerer oder größerer Schichtdicken in einer oder mehreren Schichten ein.

Vorzugsweise ist der vorstehende Auflagebereich in Dickschichttechnik auf das Substrat aufgebracht. Vorzugsweise ist ein den Hohlraum aufweisender Auftrag in Dickschichttechnik auf das Substrat aufgebracht.

Der Einsatz der Dickschichttechnik ermöglicht einen Schichtenauftrag im µm-Bereich mit hoher Genauigkeit und kostengünstig. Vorteilhaft können die Schichtdicken im µm-Bereich sowohl für eng tolerierte Strukturen als auch für die elektrische Kontaktierung genutzt werden.

Gemäß einer Ausgestaltung hat die Oberflächenstruktur eine treppenförmige Oberflächengestaltung mit ausgehend von einer tiefsten Stufe unterhalb des Zentrums der Mikromembran zu der randseitigen Befestigung hin ansteigenden umlaufenden Treppenstufen. Hierdurch wird ein muldenartiger Hohlraum verwirklicht. Die Treppenstufen nehmen vorzugsweise die Form der ausgelenkten Membran an. Diese reliefartige Ausgestaltung der Mulde ist vorteilhaft insbesondere bei Herstellung der Mulde in Dickschichttechnik, wobei die Stufen in mehreren Schritten aufgetragen werden können.

Bei der Lösung von Anspruch 9 ist die Membran randseitig elastisch auf dem Substrat befestigt. Die elastische Befestigung begünstigt die Auslenkung der Membran, indem sie eine randseitige Verwindung und/oder ein Zusammenziehen oder Ausdehnen der Membran in der Membranebene ermöglicht. Hierdurch ist bei einem Mikromembranventil eine erhöhte Flächenpressung im Dichtungsbereich erreichbar und bei einer Mikromembranpumpe eine erhöhte Volumenverdrängung.

Die elastische Randbefestigung der Membran kann beispielsweise mittels eines Epoxidharz- oder eine Polyurethanklebers verwirklicht werden, der die Membran randseitig mit der Seite des Substrats verbindet. Für eine relativ starre Befestigung kann hingegen beispielsweise ein Keramikkleber oder eine Lotverbindung verwendet werden, insbesondere wenn eine Verbindung mit einem definierten, sehr kleinen Auflagebereich hergestellt werden soll.

Grundsätzlich ist es möglich, mindestens einen Durchgang im Bereich der randseitigen Befestigung der Membran auszubilden. Gemäß einer Ausgestaltung ist die Membran randseitig abgedichtet. Sämtliche Durchgänge verlaufen dann durch das Substrat.

Gemäß einer bereits oben angesprochenen Ausgestaltung ist die weitere Membranlage eine weitere Piezokeramik oder ein Material mit einem ähnlichen Temperaturausdehnungskoeffizienten wie die elektrisch ansteuerbare Piezokeramik. Hierdurch wird ein möglichst temperaturunabhängiges Arbeiten der Fluidaktorik ebenfalls begünstigt.

Gemäß einer Ausgestaltung ist die weitere Piezokeramik eine weitere elektrisch ansteuerbare Piezokeramik. Hierdurch ist die Auslenkbarkeit der Membran in verschiedenen Richtungen verbessert.

Gemäß einer weiteren Ausgestaltung ist die Piezokeramik und/oder die weitere Piezokeramik ein passiver Auslenkungssensor. Dies ermöglicht eine Überwachung der jeweiligen Membranauslenkung. Eine elektrisch ansteuerbare Piezokeramik und/oder weitere Piezokeramik kann als passiver Auslenkungssensor genutzt werden, wenn sie nicht elektrisch angesteuert wird, sondern eine Sensorspannung abgegriffen wird.

Eine elektrisch ansteuerbare Piezokeramik kann eine Piezokeramik sein, die so angeordnet ist, daß von außen elektrische Kontakte angelegt werden können. Gemäß einer Ausgestaltung weist die Piezokeramik und/oder die weitere Piezokeramik elektrische Kontakte zum Anlegen einer Spannung auf. Die elektrischen Kontakte sind beispielsweise als elektrisch leitfähige Beschichtungen auf den beiden zur Membranebene parallelen Seiten der Piezokeramik ausgebildet.

Gemäß einer Ausgestaltung hat die dem Substrat zugewandte Membranlage seitlich einen Überstand über die andere Membranlage und ist im Bereich des Überstandes auf dem Substrat befestigt. Dies erleichtert insbesondere die elektrische Kontaktierung einer elektrisch ansteuerbaren Piezokeramik.

Vorzugsweise sind die Membranlagen miteinander verklebt, vorzugsweise ganzflächig in ihrer Kontaktfläche.

Für die Fluidaktorik geeignete Mikromembranen werden kostengünstig auf dem Markt angeboten mit Durchmessern von typischerweise 10 bis 40 mm und einer Dicke der Piezokeramik von jeweils etwa 0,3 bis 1 mm (z.B. von der Firma PI Ceramik). Die auf der Mikromembran mittig vermessene Auslenkung beträgt ohne Gegenlast je nach Dicke und insbesondere je nach Durchmesser wenige µm bis ca. 150 µm.

Gemäß einer Ausgestaltung weist das Substrat zwei Kanäle mit Öffnungen unterhalb der Membran auf, von denen eine Öffnung zentral unterhalb der Membran angeordnet ist, zur Bildung mindestens eines 2/2-Wege-Membranventils. Wenn die Membran die zentrale Öffnung verschließt, ist der Durchgang zwischen den beiden Kanälen unterbrochen und das Ventil ist geschlossen. Gibt die Membran die zentrale Öffnung frei, sind die beiden Kanäle durchgängig und das Ventil ist geöffnet. Bei einem normal offenen Membranventil gibt die Membran im nicht ausgelenkten Zustand die Öffnung frei und wölbt sich im ausgelenkten Zustand zu dieser hin und verschließt sie.

Bei einem normal geschlossenen Membranventil dichtet die Membran im nicht ausgelenkten Zustand die zentrale Öffnung frei und wölbt sich im ausgelenkten Zustand von dieser weg, so daß das Ventil geöffnet ist.

Vorzugsweise hat das Substrat einen zentralen vorstehenden Auflagebereich, der um die zentral unterhalb der Membran angeordnete Öffnung umläuft, um die Öffnung besonders dicht zu verschließen. Der insbesondere aus Gründen von Partikeltoleranz und Oberflächenrauhigkeit zweckmäßige zentrale Auflagebereich ist beispielsweise in Dickschichttechnik auf einem keramischen Substrat aufgebracht oder bei einem Spritzguß-Keramikteil geformt. Gemäß einer Ausgestaltung hat die abdichtende Membran eine elastische Silikonschicht, die die Dichteigenschaft verbessert.

Gemäß einer weiteren Ausgestaltung hat die Membran einen zentralen Durchgangskanal mit einer Öffnung auf der dem Substrat zugewandten Seite und einer weiteren Öffnung auf der vom Substrat abgewandten Seite und ist ein die Membran überspannender Deckel mit einem zentralen Dichtsitz für die von Substrat abgewandte Öffnung der Membran vorhanden zur Bildung eines 3/2-Wege-Mikromembranventils. Wenn die Membran an dem Dichtsitz des Deckels anliegt, ist der Durchgang durch die Öffnung der Membran geschlossen. Dann ist der Weg durch die Kanäle des Substrats geöffnet. Wenn die Membran an der zentral darunter gelegenen Öffnung des Substrats anliegt, ist der Kanal mit der dezentralen Öffnung geschlossen und der Strömungsweg zwischen den Kanälen mit den zentralen Öffnungen im Substrat und in der Membran geöffnet.

Vorzugsweise hat das Substrat außerhalb der Befestigung der Membran oder der Deckel einen weiteren Kanal zur Verbindung mit der vom Substrat abgewandten Öffnung der Membran.

Gemäß seiner Ausgestaltung hat das Substrat einen oder zwei Kanäle mit einer Öffnung unterhalb der Membran zur Bildung eines Mikrovolumenverdrängers. Durch Auslenkung der Membran ist es möglich, ein Fluid durch mindestens einen Kanal zu fördern.

Gemäß einer Ausgestaltung weist die Fluidaktorik ein erstes 2/2-Wege-Mikromembranventil, einen damit verbundenen Mikrovolumenverdränger und ein damit verbundenes zweites 2/2-Wege-Mikromembranventil auf, um eine Mikromembranpumpe zu verwirklichen. Durch elektrische Steuerung der Mikromembranventile und des Mikrovolumenverdrängers kann ein Fluid in einer beliebigen Richtung von der Mikromembranpumpe befördert werden. Die Mikromembranpumpe kann unidirektional oder bidirektional arbeiten.

Gemäß einer weiteren Ausgestaltung sind die Membranen des ersten und zweiten Mikroventils sowie des Mikrovolumenverdrängers auf demselben Substrat befestigt. Gemäß einer weiteren Ausgestaltung sind die Membranen des ersten und zweiten Mikroventils auf der einen Seite des Substrats und die Membran des Mikrovolumenverdrängers auf der anderen Seite des Substrats angeordnet. Gemäß einer weiteren Ausgestaltung ist der Mikrovolumenverdränger über Durchgangskanäle des Substrats mit den Mikroventilen verbunden. Diese Ausgestaltungen begünstigen einen besonders kompakten Aufbau.

Gemäß einer Ausgestaltung weist die Fluidaktorik drei 2/2-Wege-Mikromembranventile auf, die in Serie hintereinander geschaltet sind, zur Bildung einer peristaltischen Mikromembranpumpe. Die Pumpfunktion der Mikromembranpumpe wird durch die elektrische Steuerung der Mikromembranventile sichergestellt. Die Mikromembranpumpe kann unidirektional oder bidirektional arbeiten.

Gemäß einer weiteren Ausgestaltung sind die Membranen der drei Mikroventile auf demselben Substrat befestigt. Gemäß einer weiteren Ausgestaltung sind die Membranen zweier Mikroventile auf der einen Seite des Substrats und die Membranen eines Mikroventils auf der anderen Seite des Substrats angeordnet. Gemäß einer weiteren Ausgestaltung sind die hintereinander geschalteten Mikroventile über Durchgangskanäle des Substrats miteinander verbunden. Diese Ausgestaltungen begünstigen eine besonders kompakte Ausführung der peristaltischen Mikromembranpumpe.

Gemäß einer Ausgestaltung weist die Fluidaktorik ein 2/2-Wege-Mikromembranventil und einen damit verbundenen Mikrovolumenverdränger zur Bildung einer Mikromembranpumpe auf. Die Pumpfunktion wird durch die elektrische Steuerung des Mikromembranventils und des Mikrovolumenverdrängers sichergestellt. Auch diese Mikromembranpumpe kann unidirektional oder bidirektional arbeiten.

Die Förderrichtung der Mikromembranpumpe kann durch Auslegung der Strömungswiderstände der beiden Kanäle und der Ansteuerweise der Mikromembranen bestimmt werden. So ist es beispielsweise möglich, bei einem verhältnismäßig kleinem Strömungswiderstand in dem Kanal mit der dezentralen Öffnung des 2/2-Wege-Mikromembranventils zu erreichen, daß bei geöffnetem Mikromembranventil der Mikrovolumenverdränger hauptsächlich durch das Mikromembranventil ansaugt und bei geschlossenem Mikromembranventil das angesaugte Fluid aus dem nach außen führenden Kanal mit großem Strömungswiderstand des Mikrovolumenverdrängers ausstößt. Eine umgekehrte Strömungsrichtung wird durch eine umgekehrte Ansteuerung der Membran sichergestellt, bei der bei geschlossenem Mikromembranventil der Mikrovolumenverdränger ansaugt bzw. bei geöffnetem Ventil ausstößt.

Unterschiedliche Strömungswiderstände sind sowohl z.B. durch geometrische Ausprägung als auch unter Ausnutzung einer Phasengrenze gasförmig-flüssig möglich.

Im letzteren Fall verbleibt die Mikrofluidaktorik mit einem Gas (z.B. Luft) gefüllt. Nur auf der Seite des großen Strömungswiderstandes wird der Kanal mit der zu fördernden Flüssigkeit gefüllt und sukzessiv geleert.

Gemäß einer weiteren Ausgestaltung sind die Membranen des Mikroventils und des Mikrovolumenverdrängers auf demselben Substrat befestigt. Gemäß einer weiteren Ausgestaltung sind die Membranen des Mikroventils und des Volumenverdrängers auf verschiedenen Seiten des Substrats befestigt. Gemäß einer weiteren Ausgestaltung sind das Mikroventil und der Mikrovolumenverdränger durch einen Durchgangskanal des Substrats miteinander verbunden. Diese Ausgestaltungen begünstigen einen besonders kompakten Aufbau.

Gemäß einer Ausgestaltung ist die Mikromembranpumpe mit einer Pipettenspitze zur Aufnahme und Abgabe von Flüssigkeit verbunden. Vorteilhaft ist die Mikromembranpumpe so ausgelegt, daß die Kapillarkräfte der Flüssigkeit in der Pipettenspitze das Ansaugen von Fluid durch die Pipettenspitze verhindern, wenn der Mikrovolumenverdränger bei geöffnetem Mikroventil ansaugt.

Gemäß einer Ausgestaltung weist die Fluidaktorik mindestens einen Sensor auf, der zur Ermittlung der Pump- und Flüssigkeitseigenschaften eingesetzt wird, z.B. Druck- und/oder Temperatursensor.

Gemäß einer weiteren Ausgestaltung weist die Fluidaktorik einen Filter auf, um Partikel aus einem Fluid herauszufiltern, das beispielsweise ein Gas oder eine von einem Gas bewegt Flüssigkeit sein kann.

Gemäß einer Ausgestaltung ist die elektrisch ansteuerbare Piezokeramik mit einer elektrischen Steuervorrichtung verbunden. Diese umfaßt eine elektrische Spannungsversorgung. Durch Ansteuern der Piezokeramik mit der Steuervorrichtung werden die Auslenkungen der Membran gesteuert. Gemäß einer Ausgestaltung weist die elektrische Steuervorrichtung eine Einrichtung zum Ermitteln der Auslenkung der Membran anhand der an der elektrisch ansteuerbaren Piezokeramik anliegenden Spannung und/oder eine Einrichtung zum Ermitteln von Sensorsignalen auf.

Die erfindungsgemäße Fluidaktorik kombiniert preiswerte und etablierte Technik mit hoher mechanischer Fertigungsgüte und der Möglichkeit, Mikrofluidik, Sensorik, Membranaktorik und Elektronik auf einem Träger zu integrieren.

Eine Mikrofluidaktorik im Sinne dieser Anmeldung ist eine Fluidaktorik, die zum Steuern oder Fördern kleinster Fluidmengen im Mikroliterbereich und Submikroliterbereich (insbesondere von ca. 50 µl bis ca. 1 Nanoliter) zum Einsatz kommen kann. Charakteristisch für die Mikrofluidik ist die Ausführung in Mikrosystemtechnik. Die mikrosystemtechnische Herstellung kann insbesondere den Einsatz der folgenden Materialien umfassen: Keramik und/oder Kunststoffe und/oder Glas und/oder Metalle und/oder Halbleiter. Diese werden mittels geeigneter Fertigungsverfahren der Mikrotechnik bzw. Mikrostrukturierung geformt bzw. bearbeitet, z.B. Spritzguß, Läppen, Dickschichttechnik (bei Keramiken) oder Liga-Verfahren (bei Metallen, Kunststoffen und Keramiken) oder Lithographie und Ätzverfahren (bei Halbleitern). Charakteristisch für die Mikrofluidaktorik ist das Vorliegen kleinster Strukturen, insbesondere im Bereich von 1 bis 500 µm.

Die Mikrofluidaktorik ist insbesondere als Mikromembranventil und/oder als Mikrovolumenverdränger für Gase geeignet. Sie kann insbesondere als Luftdruck-Antriebseinheit beim Dosieren von Flüssigkeiten in Mikroliter und Submikroliterbereich zum Einsatz kommen. Gemäß einer Ausgestaltung umfaßt eine mikrofluidische Dosiereinrichtung mindestens eine Fluidaktorik.

Die Erfindung wird nachfolgend anhand der anliegenden Zeichnungen von Ausführungsbeispielen näher erläutert. In den Zeichnungen zeigen:
- Fig. 1: ein normal offenes 2/2-Wege-Mikromembranventil mit Hohlraum in grobschematischem Querschnitt;
- Fig. 2: ein normal geschlossenes 2/2-Wege-Mikromembranventil im grobschematischen Querschnitt;
- Fig. 3: ein 3/2-Wege-Mikromembranventil im grobschematischen Querschnitt;
- Fig. 4: ein Mikrovolumenverdränger in grobschematischem Querschnitt;
- Fig. 5: eine Mikromembranpumpe mit zwei Mikromembranventilen und einem Mikrovolumenverdränger im grobschematischen Querschnitt;
- Fig. 6: eine peristaltische Mikromembranpumpe mit drei Mikromembranventilen im grobschematischen Querschnitt;
- Fig. 7: eine Mikromembranpumpe mit einem Mikromembranventil und einem Mikrovolumenverdränger im grobschematischen Querschnitt;
- Fig. 8: eine Mikromembranpumpe mit einem Drucksensor und einer Pipettenspitze im grobschematischen Querschnitt;
- Fig. 9: ein Substrat mit einer in Dickschichttechnik aufgebrachten Mulde in der Draufsicht;
- Fig. 10: dasselbe Substrat in der Unteransicht;
- Fig. 11: dasselbe Substrat mit Membranen bestückt und aufgesetzter Pipettenspitze im grobschematischen Querschnitt (das Substrat ist in Querrichtung erheblich stärker vergrößert als in Längsrichtung).

Bei der nachfolgenden Beschreibung verschiedener Ausführungsbeispiele sind für entsprechende Bauelemente mit derselben Bezeichnung dieselben Bezugsziffern verwendet worden, wobei konstruktive Unterschiede durch Anstriche gekennzeichnet wurden.

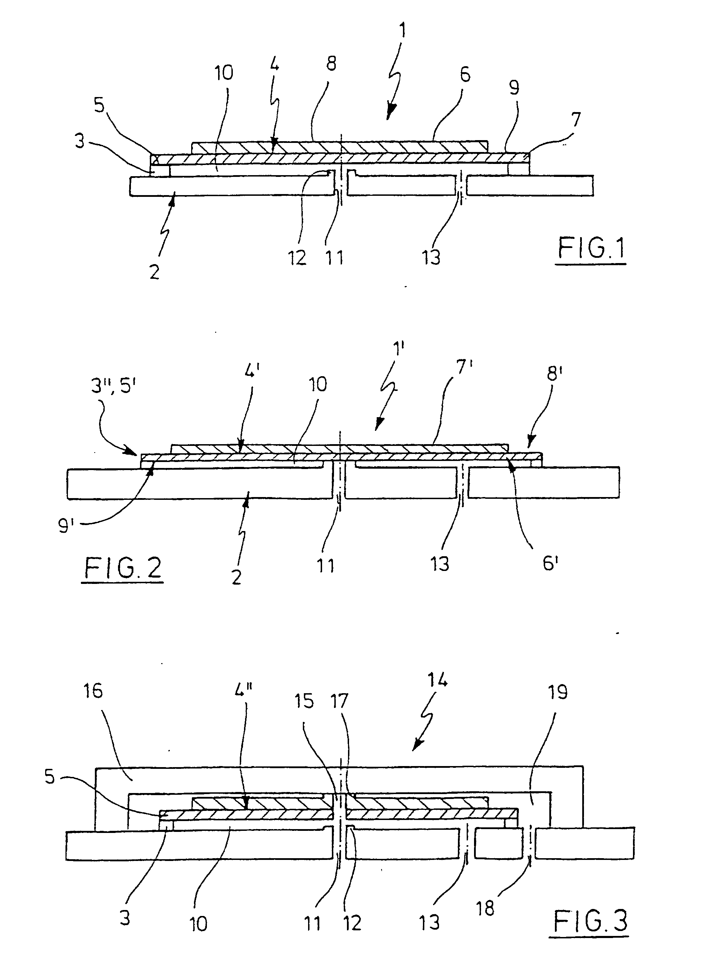

Ein normal offenes 2/2-Wege-Mikromembranventil 1 gemäß Fig. 1 hat ein Substrat 2, das einen randseitigen, von einer Seite vorstehenden Auflagebereich 3 aufweist, der vorzugsweise kreisringförmig ist und auf dem eine Membran 4, die vorzugsweise kreisrund ist, bei 5 randseitig fixiert ist, vorzugsweise durch Kleben.

Die Membran 4 umfaßt zwei Piezokeramiken 6, 7, die flächig miteinander verklebt sind. Die vom Substrat 2 abgewandte Piezokeramik 6 hat geringere Abmessungen als die dem Substrat 2 zugewandte Piezokeramik 7. Die Piezokeramik 6 ist über eine elektrisch leitfähige Kontaktfläche 8 auf der Außenseite und über eine elektrisch leitfähige Kontaktfläche 9 auf der Oberseite der Piezokeramik 7 elektrisch ansteuerbar. Sie ist eine aktive Piezokeramik. Die Piezokeramik 7 ist nicht elektrisch ansteuerbar und damit passiv.

Zwischen dem Substrat 2 und der Membran 4 ist ein Hohlraum 10 ausgebildet. Der Hohlraum 10 ist randseitig durch den Auflagebereich 3 und die abdichtende Fixierung 5 der Membran 4 abgedichtet. Die randseitige Fixierung 5 der Membran 4 hat vorzugsweise eine gewisse Elastizität.

Das Substrat 2 hat zentral unter der Membran 4 einen Durchgangskanal 11 mit Öff nungen zum Hohlraum 10 und zur Umgebung. Ferner hat das Substrat 2 einen die Öffnung des Durchgangskanals 1 zum Hohlraum 10 umgebenden zentralen hochstehenden Auflagebereich 12, der nachfolgend Dichtungskragen genannt wird.

Ferner hat das Substrat 2 einen Durchgangskanal 13, der dezentral bezüglich der Membran 4 angeordnet ist. Die Durchgangskanäle können beispielsweise einen Durchmesser von etwa 0,2 bis 1 mm aufweisen.

Bei gleichgerichteter elektrischer Ansteuerung wölbt sich die Membran 4 nach unten aus. Im ausgelenkten Zustand sitzt sie auf dem Dichtungskragen 12 auf und verschließt den Durchgangskanal 11. Infolgedessen wird der Durchfluß eines Fluids durch die Durchgangskanäle 11 und 13 unterbrochen.

Bei entgegengesetzter elektronischer Ansteuerung wölbt sich die Membran 4 nach oben aus und erhöht durch den größeren Abstand die Durchflußrate.

Die Membran 4 hat im ausgelenkten Zustand eine Hub- bzw. Kraftreserve, um einem angelenkten Überdruck an dem Durchgangskanal 11 entsprechend dem Differenzdruck zum zweiten Durchgangskanal 13 dichtend zu widerstehen. Ebenso weist die Membran 4 im ausgelenkten Zustand eine genügend große Rückstellkraft auf, um einen angelegten Unterdruck freizugeben. Der zusätzliche Einfluß des umgebenden Atmosphärendruckes auf die Differenzdruck-Durchflußeigenschaften ist in beiden Druckzuständen berücksichtigt.

Durch den einstellbaren Hub bzw. den mit einem Fluid durchströmten, spaltartigen Hohlraum 10 ist eine Ansteuerung als Proportionalventil möglich.

Gemäß Fig. 2 ist für ein - normal geschlossenes - Mikromembranventil mit einem vergleichsweise wenig vorstehenden, dünnen Auflagebereich 3"oder direkt auf dem Substrat 2 eine Membran 4' praktisch ohne Hohlraum 10 randseitig bei 5' fixiert. Die Fixierung 5' ist zugleich als umlaufende Dichtung ausgebildet, die elastische Eigenschaften hat.

Die Membran 4 hat die aktive, elektrisch ansteuerbare Piezokeramik 6' auf der dem Substrat 2 zugewandten Seite und die passive Piezokeramik 7' auf der vom Substrat 2 abgewandten Seite. Der Kontakt 8' ist im seitlich vorstehenden Randbereich der Piezokeramik 5' zugänglich und die Kontaktfläche 9' ist auf dem Substrat 2 seitlich herausgeführt.

Die Durchgangskanäle 11, 13 im Substrat 2 entsprechen der Ausführung von Fig. 1.

In der gezeichneten Ausgangslage ist ohne Ansteuerung das Mikromembranventil 1' geschlossen. Durch entgegengesetzte Ansteuerung wird eine gewisse, nur durch den Formschluß gegebene Leckrate durch Kraftbeaufschlagung vollständig vermieden. Durch gleichgerichtete elektrische Ansteuerung der Piezokeramik 6' kann die Membran 4 vom Substrat 2 weggewölbt werden, wodurch das 2/2-Wege-Mikromembranventil 1' geöffnet wird.

Das 3/2-Wege-Mikromembranventil 14 von Fig. 3 unterscheidet sich von dem 2/2-Wege-Mikromembranventil 1 von Fig. 1 durch einen zentralen Durchgangskanal 15 der Membran 4". Der Durchgangskanal 15 hat eine Öffnung zum Hohlraum 10 und eine Öffnung auf der vom Substrat 2" abgewandten Seite.

Ferner hat das Mikromembranventil 14 als Besonderheit einen topfförmig über die Membran 4" auf das Substrat 2" gestülpten Deckel 16. Der Deckel 16 ist an seinem Öffnungsrand abdichtend auf dem Substrat 2" fixiert. Er weist an seinem Boden gegenüber der Öffnung des Durchgangskanals 15 einen Dichtsitz für den Rand der Öffnung des Durchgangskanals 15 auf. Dort hat der Deckel 16 einen Dichtungskragen 17.

Des weiteren hat das Substrat im Abstandsbereich zwischen der Membran 4" und dem Deckel 16 einen Durchgangskanal 18, der den Zwischenraum zwischen Membran 4" und Deckel 16 mit der Außenseite des Substrats verbindet.

Im nicht ausgelenkten Zustand der Membran 4" dichtet diese auf dem Dichtsitz 17 ab. Der Durchgangskanal 15 ist damit gesperrt. Fluid kann durch die Durchgangskanäle 11 und 13 strömen.

Im ausgelenkten Zustand verschließt die Membran 4" den Dichtsitz 12. Damit ist der Durchgangskanal 13 versperrt und Fluid kann vom Durchgangskanal 11 durch den Hohlraum 19 und den Durchgangskanal 18 hindurchströmen.

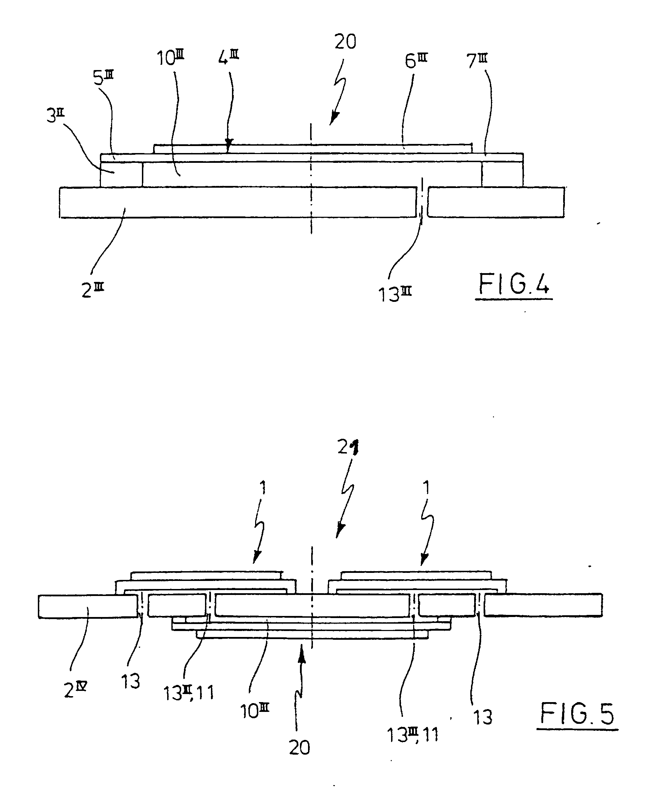

Gemäß Fig. 4 hat ein Mikrovolumenverdränger 20 im Unterschied zum Mikromembranventil 1 von Fig. 1 eine Membran 4''', die bei 5''' randseitig in einem etwas größeren Abstand vom Substrat 2''' auf einem Auflagebereich 3" fixiert ist, um einen vergrößerten Maximalhub zu ermöglichen. Mindestens ein Durchgangskanal 13 durch das Substrat 2''', der nicht durch die Membran 4"' verschlossen werden kann, ermöglicht einen Fluidtransfer in oder aus dem Hohlraum 10. Gesteuert wird dieser Fluidtransfer durch Verdrängung aufgrund Auslenkung der Membran 4'''.

Die randseitige Befestigung 5''' und Lagerung der Membran 4''' auf 3" ist druckdicht und drehflexibel. Der Auflagebereich 3" ist gegebenenfalls in Dickschichttechnik auf das Substrat 2''' aufgebracht.

Der Auflagebereich 3" ist vorzugsweise als Leiterbahn ausgeführt.

Die Lagerung der Membran 4''' ist des weiteren in Normalrichtung zur Membranebene mechanisch starr, um den generierten Druck gegen Atmosphärendruck abzufangen. Pro cm² und pro 100 mbar ergibt sich eine Kraft von 1 Newton. Handelsübliche Piezomembranen erzeugen Unter- und Überdrücke bis zu ca. 200 bis 400 mbar und verdrängen ein Volumen bis zu ca. 50 µl. Solche Membranen können hier beispielsweise zum Einsatz kommen.

Gemäß Fig. 5 besteht eine Mikromembranpumpe 21 aus einer Kombination zweier Mikromembranventile 1 gemäß Fig. 1 mit einem Mikrovolumenverdränger 20 gemäß Fig. 4.

Die Mikromembranventile 1 sind nebeneinander auf der einen Seite des Substrats 2^{IV} angeordnet und der Mikrovolumenverdränger 20 auf der anderen Seite.

Der Mikrovolumenverdränger 20 ist über Durchgangskanäle 13''' mit den Mikromembranventilen 1 verbunden. Die Durchgangskanäle 13''' sind zugleich Durchgangskanäle 11 der Mikromembranventile 1.

Die Förderung eines Fluids kann in beliebiger Richtung durch Ansteuerung der Mikromembranventile 1 und des Mikrovolumenverdrängers 20 erfolgen. Ein Arbeitshub besteht in dieser Ausführung aus vier unterschiedlichen Teilschritten: Zunächst wird ein Mikromembranventil 1 geschlossen. Im nächsten Schritt wird der Mikrovolumenverdränger 20 angesteuert, um das Fluid aus dem Hohlraum 10''' durch das geöffnete Mikromembranventil 1 herauszudrücken. Im nächsten Schritt wird letzteres Mikromembranventil 1 geschlossen und das zuvor geschlossene Mikromembranventil 1 geöffnet. Danach wird der Volumenverdränger 20 in seine Ausgangslage zurückgesteuert, um durch das nunmehr geöffnete Mikromembranventil 1 Fluid in den Hohlraum 10''' einzusaugen. Danach wird der vorbeschriebene Vorgang beliebig oft wiederholt.

Die Nutzung von Vorder- und Rückseite des Substrates 2^{IV} aus Keramik ermöglicht einen bauraum- und daher totvolumenarmen Aufbau. Die in ihrem Durchmesser größere Membran des Mikrovolumenverdrängers 20 umschließt beide mittigen Durchgangskanäle 11 der Mikromembranventile 1, so daß durch das große Kompressionsverhältnis hohe Unter- und Überdrücke erzeugt werden können. Das Substrat 2^{IV} weist ausschließlich Durchgangsbohrungen auf.

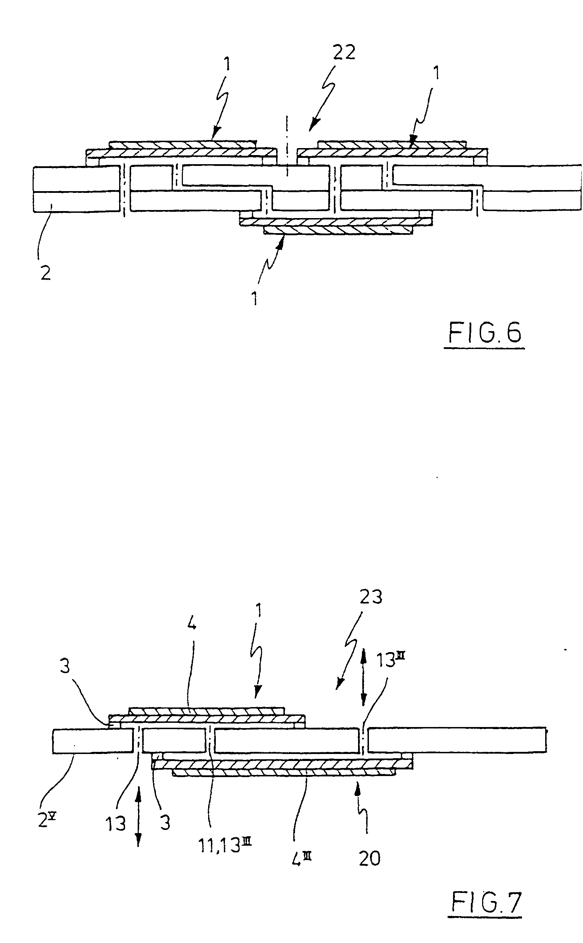

Gemäß Fig. 6 wird durch Kombination von drei aktiven Mikromembranventilen 1 eine peristaltische Mikromembranpumpe 22 geschaffen, die in beliebig vielen Arbeitshüben je nach zeitlicher Ansteuerung der Membranen 4 bidirektional Fluide fördert. Ein Arbeitshub besteht bei dieser Ausführung aus drei unterschiedlichen Teilschritten. Ein Rückfluß des Pumpmediums wird durch die Mikromembranventile 1 vermieden.

Gemäß Fig. 7 besteht eine Mikromembranpumpe 23 aus der Kombination eines aktiven Mikromembranventils 1 mit einem ventillosen Mikrovolumenverdränger 20 auf einem Substrat 2^{V}. Die Mikromembranpumpe 23 weist innerhalb eines Arbeitshubes eine Rückströmung von ca. der Hälfte des verdrängten Volumens auf, wenn die Strömungswiderstände in den Kanälen 13 und 13''' übereinstimmen.

Unter bestimmten Bedingungen ist mit dieser Mikromembranpumpe 23 ein Pumpen von Fluiden mit vergleichsweise geringer Rückströmung möglich, beispielsweise wenn durch die hohe zeitliche Dynamik der Bewegungen der Membranen 4, 4"' zeitlich unterschiedliche Ansaug- und Abgabephasen geschaffen werden. Bedingung hierfür sind unterschiedlich träge Massen in den Fluidkanälen, einseitig wirkende Kapillarkräfte oder unterschiedliche Strömungswiderstände.

Ferner ist ein Pumpen ohne Rückströmung unter der Voraussetzung möglich, daß eine Phasengrenze zwischen Mikropumpe 23 und zu förderndem Medium vorliegt, so daß das zu fördernde flüssige Medium durch Pumpen von Gas betrieben wird. Bedingungen sind durch die Phasengrenze gasförmig-flüssig inhärent unterschiedliche Strömungswiderstände und Massenträgheiten. Die Phasengrenze verbleibt durch Förderstopp bzw. sukzessive Pumprichtungsumkehr im System, so daß die zu fordernde Gesamtmenge begrenzt ist.

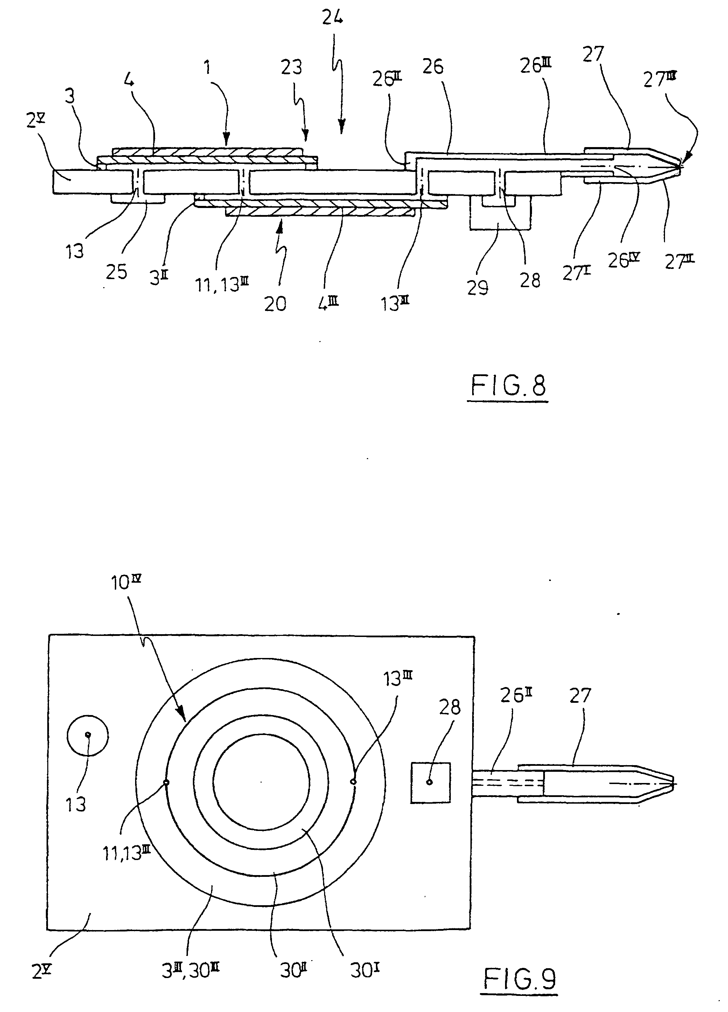

Die in der Fig. 8 gezeigte Dosiervorrichtung 24 basiert auf der Mikromembranpumpe 23 von Fig. 7. Hinzugekommen ist ein Filter 25, das an der Unterseite des Substrates 2^{V} sitzt und den Durchgangskanal 13 überdeckt.

Ferner hinzugekommen ist ein Verbindungskanal 26 in Form eines zylindrischen Röhrchens, das mit einem entlang der Mittelebene aufgeschnittenen Abschnitt oben auf das Substrat 2^{V} aufgesetzt ist, wobei der Durchgangskanal 13''' in den aufgeschnittenen Abschnitt mündet. Das dem Durchgangskanal 13''' benachbarte Ende des Verbindungskanals 26 ist durch eine Wand 26" geschlossen. Über das Substrat 2^{V} steht ein Abschnitt 26''' des Verbindungskanals 26 hinaus, in dem dieser seinen vollen Querschnitt aufweist. Das Ende dieses Abschnittes 26''' hat eine Öffnung 26^{IV}.

Auf den Abschnitt 26''' ist abdichtend eine Pipettenspitze 27 geschoben, die im Beispiel einen zylindrischen Hauptabschnitt 27' und einen konischen Anfangsabschnitt 27" mit einem Durchgang 27''' aufweist.

Bevorzugt weist der Abschnitt 26''' endseitig einen - nicht in der Zeichnung dargestellten - Konus zum abdichtenden Aufklemmen der Pipettenspitze 27 auf.

Des weiteren weist das Substrat 2^{V} einen weiteren Durchgangskanal 28 auf, der einenends zum Durchgangskanal 26 geöffnet ist. Auf der anderen Öffnung des Durchgangskanals 28 sitzt auf der unteren Seite des Substrats 2^{V} ein Drucksensor 29.

Durch Verschieben einer Luftsäule mittels der Mikropumpe 23 wird Flüssigkeit in die Pipettenspitze 27 aufgenommen oder in umgekehrter Richtung aus dieser abgegeben. Dabei wird die Luft durch das Filter 25 gefiltert, so daß Verunreinigungen der Flüssigkeit bzw. der Umgebung vermieden werden. Kapillarkräfte bewirken, daß die Flüssigkeit beim Umsetzen oder Transportierten der Pipettenspitze 27 in dieser gehalten wird. Der Drucksensor 29 dient der Bestimmung der Flüssigkeits- und Pumpparameter. Die Mikropumpe 23 bzw. die Membranen 4 des Mikromembranventiles 1 bzw. 4''' des Mikrovolumenverdrängers 20 sowie der Drucksensor 29 können über eine gemeinsame Steuer- und Auswerteelektronik betrieben werden, die nicht gezeigt ist.

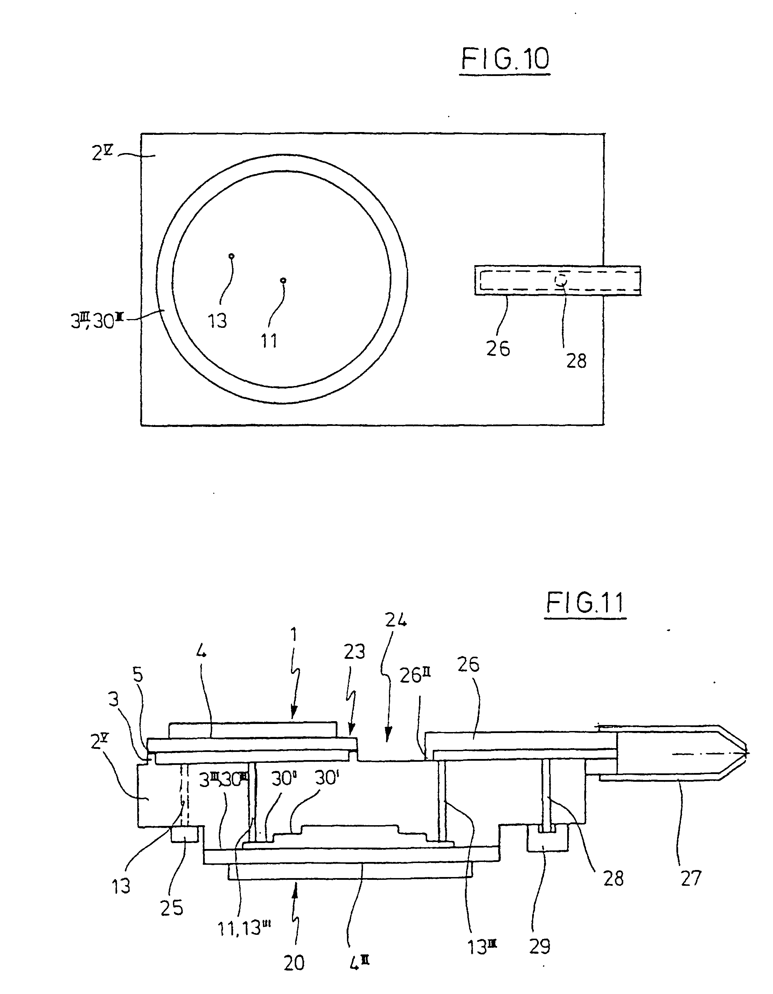

In den Fig. 9 bis 11 ist eine Ausgestaltung des Dosiersystems von Fig. 8 gezeigt, bei der zur Verwirklichung des Hohlraumes 10 das Mikromembranventil 1 an der Oberseite des Substrats 2^{V} und für die Verwirklichung eines muldenförmigen Hohlraums 10^{IV} für den Mikrovolumenverdränger an der Unterseite des Substrats 2^{V} Dickschichttechnik zur Anwendung kommt. An der Oberseite befindet sich hierfür der Auflagebereich 3 in Form einer in Dickschichttechnik kreisringförmig aufgebrachten Leiterbahn.

An der Unterseite des Substrats 2^{V} sind in Dickschichttechnik mehrere konzentrische Stufen 30', 30'', 30''' bildende Leiterbahnen angeordnet. Dabei sind von innen nach außen eine ansteigende Anzahl elektrisch leitfähiger Schichten übereinander aufgebracht. Beispielsweise hat jede Schicht eine Dicke von etwa 15 µm und besteht die innere Stufe 30'aus einer Schicht, die mittlere Stufe 30"aus zwei Schichten und die äußere Stufe aus drei Schichten.

Der hochstehende Auflagebereich 3 dient der randseitigen Fixierung der Membran 4 und die äußerste Stufe dient als randseitiger Auflagebereich 3''' der randseitigen Befestigung der Membran 4'''.

Auf der Ober- und Unterseite können ebenfalls in Dickschichttechnik weitere Leiterbahnen angebracht sein, die zur Kontaktierung der Membranen 4, 4"' bzw. des Sensors 29 bzw. weiterer elektrischer Bauteile in Hybridtechnik dienen können.

## Patentansprüche

1. Piezoelektrisch steuerbare Mikrofluidaktorik mit
- einem planaren Substrat (2), das zwei Hohlräume (10) aufweist, die auf mindestens einer Seite des Substrats (2) angeordnet sind,
- zwei Membranen (4), wobei jede Membran (4) randseitig auf einer Seite des Substrats (2) den Hohlraum (10) überspannend befestigt ist, die mindestens zwei übereinander gelagerte und miteinander verbundene Membranlagen (6, 7) aufweisen, von denen mindestens eine eine elektrisch ansteuerbare Piezokeramik ist, und die durch elektrische Ansteuerung in den Hohlraum (10) auslenkbar ist,
- wobei das Substrat (2) zwei Kanäle (11, 12) mit Öffnungen unterhalb der einen Membran (4) aufweist, von denen eine Öffnung in dem einen Hohlraum (10) zentral unterhalb der Membran (4) angeordnet ist, zur Bildung eines 2/2- Wege-Mikromembranventils (1),
- das Substrat (2) zwei Kanäle (13''') mit Öffnungen in dem anderen Hohlraum (10) unterhalb der anderen Membran (4''') hat, zur Bildung eines Mikrovolumenverdrängers (20),
- wobei das 2/2-Wege-Mikromembranventil (4) über einen Kanal mit dem Mikrovolumenverdränger (20) zur Bildung einer Mikromembranpumpe (23) verbunden ist.

2. Fluidaktorik nach Anspruch 1, bei der mindestens ein Hohlraum (10) die Form einer Mulde hat.

3. Fluidaktorik nach Anspruch 1 oder 2, bei der mindestens ein Hohlraum (10) eine Vertiefung in der Oberfläche des planaren Substrats (2) umfaßt.

4. Fluidaktorik nach einem der Ansprüche 1 bis 3, bei der mindestens ein Hohlraum (10) seitlich von einem von dem Substrat (2) vorstehenden, umlaufenden Auflagebereich (3) begrenzt ist, auf dem die Membran (4) randseitig befestigt ist.

5. Fluidaktorik nach einem der Ansprüche 1 bis 4, bei der die eine Membran (4) mit ihrem Zentrum bis zur Anlage an einem vom Rand der zentral unterhalb der Membran (4) angeordneten Öffnung vorstehenden zentralen Auflagebereich (12) oder von der Anlage an diesem vorstehenden Auflagebereich (12) weg auslenkbar ist.

6. Fluidaktorik nach Anspruch 5, bei der die Membran (4) im nicht ausgelenkten Zustand mit ihrem Zentrum am Auflagebereich (12) anliegt.

7. Fluidaktorik nach einem der Ansprüche 1 bis 6, bei der das Substrat (2) aus einer Keramik, einem Halbleiter oder einem Kunststoff ist.

8. Fluidaktorik nach einem der Ansprüche 1 bis 7, bei der das Substrat (2) ein Spritzguß-Keramikteil oder ein geprägtes Keramikteil ist.

9. Fluidaktorik nach einem der Ansprüche 4 bis 8, bei der das Substrat (2) in Dickschichttechnik aufgebrachte Oberflächenstrukturen (3, 30) aufweist.

10. Fluidaktorik nach einem der Ansprüche 1 bis 9, bei der mindestens ein Hohlraum (10) eine treppenförmige Oberflächengestaltung mit ausgehend von einer tiefsten Stufe (30') zum randseitigen Auflagebereich (3) hin ansteigenden Stufen (30', 30", 30''') hat.

11. Fluidaktorik nach einem der Ansprüche 1 bis 10, bei der mindestens eine Membran (4) randseitig elastisch auf einer Seite des Substrats (2) befestigt ist.

12. Fluidaktorik nach einem der Ansprüche 1 bis 11. bei der mindestens eine Membran (4) randseitig abgedichtet ist.

13. Fluidaktorik nach einem der Ansprüche 1 bis 12, bei der die weitere Membranlage (7) mindestens einer Membran (4) ebenfalls eine Piezokeramik oder ein Material mit einem ähnlichen Temperaturausdehnungskoeffizienten wie die elektrisch ansteuerbare Piezokeramik ist und/oder bei der das Substrat (2) einen ähnlichen Temperaturausdehnungskoeffizienten wie die Membran (4) hat.

14. Fluidaktorik nach Anspruch 13, bei der die weitere Piezokeramik eine weitere elektrisch ansteuerbare Piezokeramik ist.

15. Fluidaktorik nach einem der Ansprüche 1 bis 14, bei der die Piezokeramik und/oder die weitere Piezokeramik ein passiver Auslenkungssensor ist.

16. Fluidaktorik nach einem der Ansprüche 1 bis 15, bei der die Membranlagen (7, 8) mindestens einer Membran miteinander verklebt sind.

17. Fluidaktorik nach einem der Ansprüche 1 bis 16, bei der die Piezokeramik und/oder die weitere Piezokeramik elektrische Kontakte (8, 9) zum Anlegen und/oder zum Abgreifen einer Spannung aufweist.

18. Fluidaktorik nach einem der Ansprüche 1 bis 17, bei der die dem Substrat (2) zugewandte Membranlage (7) mindestens einer Membran seitlich einen Überstand über die andere Membranlage aufweist und im Bereich des Überstandes auf dem Substrat (2) befestigt ist.

19. Fluidaktorik nach einem der Ansprüche 1 bis 18, bei der mindestens eine Membran (4) kreisscheibenförmig ist.

20. Fluidaktorik nach einem der Ansprüche 1 bis 19, bei der die Membran (4) des Mikromembranventils (1) und die Membran (4''') des Mikrovolumenverdrängers (20) auf verschiedenen Seiten des Substrats (2^{V}) befestigt sind.

21. Fluidaktorik nach einem der Ansprüche 1 bis 20, bei der Mikromembranventil (1) und Mikrovolumenverdränger (20) durch einen Durchgangskanal (11, 13''') des Substrats (2^{V}) miteinander verbunden sind.

22. Fluidaktorik nach einem der Ansprüche 1 bis 21, die ein erstes 2/2-Wege-Mikromembranventil (1), einen damit verbundenen Mikrovolumenverdränger (20) und ein damit verbundenes zweites 2/2-Wege-Mikromembranventil (1) umfaßt, zur Bildung einer Mikromembranpumpe (21).

23. Fluidaktorik nach Anspruch 22, bei der die Membranen (4, 4''') des ersten und zweiten Mikroventils (1) sowie des Mikrovolumenverdrängers (20) auf demselben Substrat (2^{IV}) befestigt sind.

24. Fluidaktorik nach Anspruch 23, bei der die Membranen (4) des ersten und zweiten Mikroventils auf der einen Seite des Substrats (2^{IV}) und die Membran (4''') des Mikrovolumenverdrängers (20) auf der anderen Seite des Substrats (2^{IV}) angeordnet sind.

25. Fluidaktorik nach einem der Ansprüche 22 bis 24, bei der der Mikrovolumenverdränger (20) über Durchgangskanäle des Substrats mit den Mikroventilen (1) verbunden ist.

26. Fluidaktorik nach einem der Ansprüche 1 bis 25, bei der die Mikromembranpumpe (23) mit einer Pipettenspitze (27) zur Aufnahme und Abgabe von Flüssigkeit verbunden ist.

27. Fluidaktorik nach einem der Ansprüche 1 bis 26, bei der die Mikromembranpumpe (23) mit mindestens einem Sensor (29) und/oder mindestens einem Filter (25) verbunden ist.

28. Fluidaktorik nach einem der Ansprüche 1 bis 27, mit einer mit der elektrisch ansteuerbaren Piezokeramik verbundenen elektrischen Steuervorrichtung.

29. Fluidaktorik nach Anspruch 28, bei der die elektrische Steuervorrichtung eine Einrichtung zum Ermitteln der Auslenkung der Membran (4) und/oder eine Einrichtung zum Ermitteln von Sensorsignalen aufweist.

30. Mikrofluidische Dosiereinrichtung mit mindestens einer Fluidaktorik nach einem der Ansprüche 1 bis 29.

## Claims

1. A piezoelectrically controllable microfluid actor system, comprising
- a planar substrate (2) which has two cavities (10) which are arranged on at least one side of the substrate (2),
- two diaphragms (4), each of which diaphragms (4) having its border mounted on one side of the substrate (2) so as to span the cavity (10), which has at least two superposed and interconnected diaphragm layers (6, 7) at least one of which is an electrically drivable piezoceramic element, and which is adapted to be deflected into the cavity (10) by means of an electric driver,
- wherein the substrate (2) has two passages (11, 12) with apertures below one diaphragm (4) and one aperture of which is disposed in the one cavity (10) centrally below the diaphragm (4), to form a 2/2-way micro-diaphragm valve (1),
- the substrate (2) has two passages (13''') with apertures in the other cavity (10) below the other diaphragm (4"'), to form a micro-volume positive displacer (20),
- wherein the 2/2-way micro-diaphragm valve (4) is connected to the micro-volume positive displacer (20) via a passage, to form a micro-diaphragm pump (23).

2. The fluid actor system as claimed in claim 1 wherein the least one cavity (10) has the shape of a trough.

3. The actor system as claimed in claim 1 or 2, wherein at least one cavity (10) comprises a depression in the surface of the planar substrate (2).

4. The fluid actor system as claimed in any one of claims 1 to 3 wherein the at least one cavity (10) is defined laterally by a circumferential support area (3) projecting from the substrate (2) on which the diaphragm (4) has it border mounted.

5. The fluid actor system as claimed in any one of claims 1 to 4 wherein the one diaphragm (4) is adapted to be deflected in its centre until it bears on a central support area (12) projecting centrally from the border of the aperture disposed centrally below the diaphragm (4) or is adapted to be deflected away from its bearing position on this projecting support area (12).

6. The fluid actor system as claimed in claim 5 wherein the diaphragm (4), when in a non-deflected condition, has its centre abutted against the support area (12).

7. The fluid actor system as claimed in any one of claims 1 to 6 wherein the substrate (2) is made of a ceramic material, semiconductor or plastic material.

8. The fluid actor system as claimed in any one of claims 1 to 7 wherein the substrate (2) is an injection-moulded ceramic component or stamped ceramic component.

9. The fluid actor system as claimed in any one of claims 4 to 8 wherein the substrate (2) has surface structures (3, 30) applied by a thick-film technique.

10. The fluid actor system as claimed in any one of claims 1 to 9 wherein the at least one cavity (10) has a stepped surface configuration including steps (30', 30", 30''') which, starting from a lowermost step (30'), ascend towards the border-sided support area (3).

11. The fluid actor system as claimed in any one of claims 1 to 10 wherein at least one diaphragm (4) has its border resiliently mounted on one side of the substrate (2).

12. The fluid actor system as claimed in any one of claims 1 to 11 wherein the at least one diaphragm (4) is sealed at its border.

13. The fluid actor system as claimed in any one of claims 1 to 12 wherein the further diaphragm layer (7) of at least one diaphragm (4) also is a piezoceramic element or a material which has a temperature coefficient of expansion similar to that of the electrically drivable piezoceramic system and/or wherein the substrate (2) has a temperature coefficient of expansion similar to that of the diaphragm (4).

14. The fluid actor system as claimed in claim 13 wherein the further piezoceramic element is a further electrically drivable piezoceramic element.

15. The fluid actor system as claimed in any one of claims 1 to 14 wherein the piezoceramic element and/or further piezoceramic element is a passive deflection sensor.

16. The fluid actor system as claimed in any one of claims 1 to 15 wherein the diaphragm layers (7, 8) of at least one diaphragm are adhered to each other.

17. The fluid actor system as claimed in any one of claims 1 to 16 wherein the piezoceramic element and/or further piezoceramic element has electric contacts (8, 9) to apply and/or pick off a voltage.

18. The fluid actor system as claimed in any one of claims 1 to 17 wherein the diaphragm layer (7) facing the substrate (2) of at least one diaphragm has a sideward projection beyond the other diaphragm layer and is mounted on the substrate (2) in the area of the projection.

19. The fluid actor system as claimed in any one of claims 1 to 18 wherein the at least one diaphragm (4) is of a circular disk shape.

20. The fluid actor system as claimed in any one of claims 1 to 19 wherein the diaphragm (4) of the micro-diaphragm valve (1) and the diaphragm (4''') of the micro-volume positive displacer (20) are mounted on different sides of the substrate (2^{V}).

21. The fluid actor system as claimed in any one of claims 1 to 20 wherein the micro-diaphragm valve (1) and the micro-volume positive displacer (20) are connected to each other via a through passage (11, 13''') of the substrate (2^{V}).

22. The fluid actor system as claimed in any one of claims I to 21 which comprises a first 2/2-way micro-diaphragm valve (1), a micro-volume positive displacer (20) in communication therewith, and a second 2/2-way micro-diaphragm valve (1) in communication therewith, to form a micro-diaphragm pump (21).

23. The fluid actor system as claimed in claim 22 wherein the diaphragms (4, 4''') of the first and second microvalves (1) and that of the micro-volume positive displacer (20) are mounted on the same substrate (2^{IV}).

24. The fluid actor system as claimed in claim 23 wherein the diaphragms (4) of the first and second microvalves are disposed on one side of the substrate (2^{IV}) and the diaphragm (4''') of the micro-volume positive displacer (20) is disposed on the other side of the substrate (2^{IV}).

25. The fluid actor system as claimed in any one of claims 22 to 24 wherein the micro-volume positive displacer (20) is in communication with the microvalves (1) via the through passages of the substrate.

26. The fluid actor system as claimed in any one of claims 1 to 25 wherein the micro-diaphragm pump (23) is connected to a pipette tip (27) to receive and deliver a liquid.

27. The fluid actor system as claimed in any one of claims 1 to 26 wherein the micro-diaphragm pump (23) is in communication with at least one sensor (29) and/or at least one filter (25).

28. The fluid actor system as claimed in any one of claims 1 to 27, including an electric controller connected to the electrically drivable piezoceramic element.

29. The fluid actor system as claimed in claim 28 wherein the electric controller has a device for determining the deflection of the diaphragm (4) and/or a device for detecting sensor signals.

30. A microfluidic proportioning device including at least one fluid actor system as claimed in any one of claims 1 to 29.

## Revendications

1. Micro-actionneur pour fluide à commande piézoélectrique comprenant
- un substrat (2) plan comprenant deux cavités (10) disposées sur au moins un coté du substrat (2),
- deux membranes (4), chaque membrane (4) étant fixée au niveau des bords sur un coté du substrat (2) de façon à recouvrir la cavité (10), qui comprennent au moins deux couches de membrane (6, 7) disposées l'une sur l'autre et reliées l'une à l'autre, dont au moins une est une piézo-céramique pouvant être commandée électriquement, et est déformable dans la cavité (10) par commande électrique,
- le substrat (2) comprenant deux canaux (11, 12) avec des ouvertures sous l'une des membranes (4), une ouverture étant disposée dans l'une des cavités (10) de façon centrale sous la membrane (4) afin de former une micro-vanne 2/2 voies à membrane (1),
- le substrat (2) comprenant deux canaux (13"') avec des ouvertures dans l'autre cavité (10) sous l'autre membrane (4"'), pour la formation d'un micro-organe de refoulement volumétrique (20),
- la micro-vanne 2/2 voies à membrane (4) étant reliée par un canal avec le micro-organe de refoulement volumétrique (20) pour former une micro-pompe à membrane (23).

2. Actionneur pour fluide selon la.revendication 1, dans lequel au moins une cavité (10) a la forme d'une cuvette.

3. Actionneur pour fluide selon la revendication 1 ou la revendication 2, dans lequel au moins une cavité (10) comprend un renfoncement dans la surface du substrat (2) plan.

4. Actionneur pour fluide selon l'une des revendications 1 à 3, dans lequel au moins une cavité (10) est limitée latéralement par une zone d'appui (3) qui l'entoure et qui est saillante par rapport au substrat (2), et sur laquelle la membrane (4) est fixée au niveau des bords.

5. Actionneur pour fluide selon l'une des revendications 1 à 4, dans lequel l'une des membranes (4) peut se déformer avec son centre jusqu'à se mettre en contact avec une zone d'appui (12) ou se déformer en s'éloignant de cette zone d'appui (12), la zone d'appui (12) étant centrale et saillante sur le bord de l'ouverture disposée au centre sous la membrane (4).

6. Actionneur pour fluide selon la revendication 5, dans lequel la membrane (4) est plaquée avec son centre, dans un état non déformé, contre la zone d'appui (12).

7. Actionneur pour fluide selon l'une des revendications 1 à 6, dans lequel le substrat (2) est réalisé en céramique, en matériau semi-conducteur ou en plastique.

8. Actionneur pour fluide selon l'une des revendications 1 à 7, dans lequel le substrat (2) est une pièce en céramique moulée par injection ou une pièce en céramique estampée.

9. Actionneur pour fluide selon l'une des revendications 4 à 8, dans lequel le substrat (2) comporte des structures de la surface (3, 30) appliquées selon la technique des couches épaisses.

10. Actionneur pour fluide selon l'une des revendications 1 à 9, dans lequel au moins une cavité (10) a une configuration de surface en forme d'escalier avec des niveaux (30', 30", 30"') ascendants, partant d'un niveau le plus bas (30') et allant jusqu'à la zone d'appui (3) située au bord.

11. Actionneur pour fluide selon l'une des revendications 1 à 10, dans lequel au moins une membrane (4) est fixée, au niveau des bords, de façon élastique sur un coté du substrat (2).

12. Actionneur pour fluide selon l'une des revendications 1 à 11, dans lequel au moins une membrane (4) est rendue étanche au niveau des bords.

13. Actionneur pour fluide selon l'une des revendications 1 à 12, dans lequel l'autre couche de membrane (7) d'au moins une membrane (4) est aussi une piézo-céramique ou un matériau avec un coefficient de dilatation en fonction de la température similaire à celui de la piézo-céramique pouvant être commandée électriquement et/ou dans lequel le substrat (2) a un coefficient de dilatation en fonction de la température similaire à celui de la membrane (4).

14. Actionneur pour fluide selon la revendication 13, dans lequel l'autre piézo-céramique est une autre piézo-céramique pouvant être commandée électriquement.

15. Actionneur pour fluide selon l'une des revendications 1 à 14, dans lequel la piézo-céramique et/ou l'autre piézo-céramique sont des capteurs de déformation passifs.

16. Actionneur pour fluide selon l'une des revendications 1 à 15, dans lequel les couches de membrane (7, 8) d'au moins une membrane sont collées ensemble.

17. Actionneur pour fluide selon l'une des revendications 1 à 16, dans lequel la piézo-céramique et/ou l'autre piézo-céramique comprennent des contacts électriques (8, 9) pour appliquer et/ou mesurer une tension.

18. Actionneur pour fluide selon l'une des revendications 1 à 17, dans lequel la couche de membrane (7), d'au moins une membrane, faisant face au substrat (2) dépasse latéralement l'autre couche de membrane et est fixée sur le substrat (2) au niveau de ce dépassement.

19. Actionneur pour fluide selon l'une des revendications 1 à 18, dans lequel au moins une membrane (4) est en forme de disque circulaire.

20. Actionneur pour fluide selon l'une des revendications 1 à 19, dans lequel la membrane (4) de la micro-vanne à membrane (1) et la membrane (4"') du micro-organe de refoulement volumétrique (20) sont fixées sur des côtés du substrat (2^{V}) différents.

21. Actionneur pour fluide selon l'une des revendications 1 à 20, dans lequel la micro-vanne à membrane (1) et le micro-organe de refoulement volumétrique (20) sont reliés ensemble par un canal de passage (11, 13''') du substrat (2^{V}).

22. Actionneur pour fluide selon l'une des revendications 1 à 21 comprenant, pour la formation d'une micro-pompe à membrane (21), une première micro-vanne 2/2 voies à membrane (1), un micro-organe de refoulement volumétrique (20) relié avec cette dernière, et une deuxième micro-vanne 212 voies à membrane (1) reliée avec ce dernier.

23. Actionneur pour fluide selon la revendication 22, dans lequel les membranes (4, 4''') de la première et de la deuxième micro-vannes (1) ainsi que du micro-organe de refoulement volumétrique (20) sont fixées sur le même substrat (2^{IV}).

24. Actionneur pour fluide selon la revendication 23, dans lequel les membranes (4) de la première et de la deuxième micro-vannes sont disposées sur un côté du substrat (2^{IV}) et la membrane (4"') du micro-organe de refoulement volumétrique (20) est disposée sur l'autre côté du substrat (2^{IV}).

25. Actionneur pour fluide selon l'une des revendications 22 à 24, dans lequel le micro-organe de refoulement volumétrique (20) est relié avec les micro-vannes (1) par des canaux de passage du substrat.

26. Actionneur pour fluide selon l'une des revendications 1 à 25, dans lequel la micro-pompe à membrane (23) est reliée avec une pointe de pipette (27) pour la réception et le refoulement du liquide.

27. Actionneur pour fluide selon l'une des revendications 1 à 26, dans lequel la micro-pompe à membrane (23) est reliée avec au moins un capteur (29) et/ou au moins un filtre (25).

28. Actionneur pour fluide selon l'une des revendications 1 à 27 comprenant un dispositif de commande électrique relié avec la piézo-céramique pouvant être commandée électriquement.

29. Actionneur pour fluide selon la revendication 28, dans lequel le dispositif de commande électrique comprend un dispositif pour déterminer la déformation de la membrane (4) et/ou un dispositif pour déterminer des signaux de capteur.

30. Dispositif de microdosage de fluide avec au moins un actionneur pour fluide selon l'une des revendications 1 à 29.
